**Europäisches Patentamt**

**European Patent Office**

**Office européen des brevets**

(19)

(11) Veröffentlichungsnummer: **0 235 630**
**A1**

## (12) EUROPÄISCHE PATENTANMELDUNG

(21) Anmeldenummer: **87101931.1**

(22) Anmeldetag: **12.02.87**

(51) Int. Cl.⁴: **A62C 3/04** , **B01D 53/02** , **G08B 17/10**

(30) Priorität: **24.02.86 DE 3605889**

(43) Veröffentlichungstag der Anmeldung:
**09.09.87 Patentblatt 87/37**

(84) Benannte Vertragsstaaten:
**BE CH DE ES GB GR IT LI NL SE**

(71) Anmelder: **KRAFTWERK UNION AKTIENGESELLSCHAFT**
**Wiesenstrasse 35**
**D-4330 Mülheim (Ruhr)(DE)**

(72) Erfinder: **Rippel, Reinhard, Dipl.-Ing.**
**Wellenweg 7**
**D-8500 Nürnberg 90(DE)**
Erfinder: **Nopper, Helmut**
**Schwedenstrasse 18**
**D-8522 Herzogenaurach(DE)**

(74) Vertreter: **Mehl, Ernst, Dipl.-Ing. et al**
**Postfach 22 01 76**
**D-8000 München 22(DE)**

(54) **Verfahren und Einrichtung zum Erkennen und zur Bekämpfung eines Brandes in einem Aktivkohleadsorber einer Luftreinigungsanlage.**

(57) Die Erfindung betrifft ein Verfahren zum Erkennen und zur Bekämpfung eines Brandes in einem Aktivkohleadsorber (3), der Teil einer Luftreinigungsanlage mit Ansaugrohr (1) und Abblaserohr (2) ist. Es ist vorgesehen, daß auf der Reinluftseite in Strömungsrichtung hinter dem Aktivkohleadsorber (3) die Kohlenmonoxidkonzentration der abströmenden Luft durch ein Gasanalysegerät (4) gemessen wird. Der Kohlenmonoxidkonzentrationswert wird durch einen Komparator (7) mit einem vorgegebenen Schwellenwert verglichen. Bei Überschreitung dieses Schwellenwertes werden das Ansaugrohr (1) und das Abblaserohr (2) durch luftdicht verschließbare Absperrarmaturen (5) und (6) verschlossen. Ein Brand im Aktivkohleadsorber (3), der Kohlenmonoxid erzeugt, wird dadurch erstickt, bevor große Schäden am Aktivkohleadsorber (3) entstehen und sogar Schadstoffe entweichen.

## Verfahren und Einrichtung zum Erkennen und zur Bekämpfung eines Brandes in einem Aktivkohleadsorber einer Luftreinigungsanlage

Die Erfindung betrifft ein Verfahren zum Erkennen und zur Bekämpfung eines Brandes in einem Aktivkohleadsorber, der in einer Luftreinigungsanlage angeordnet ist.

Aktivkohlefilter geraten durch eine örtlich begrenzte Überhitzung in Brand. Die Gefahr eines Brandes ist gegeben, falls die Temperatur in der Aktivkohle mindestens 600 K beträgt.

Unmittelbar nachdem sich ein örtlich begrenzter Glutpunkt in einem Aktivkohlefilter gebildet hat, breitet sich der Brand zunächst mit sehr kleiner Ausbreitungsgeschwindigkeit in Richtung des Lufteintrittes aus. Danach kommt es zu einem rapiden Temperaturanstieg im Filter, der zur Zerstörung des Filterbehälters führt. Als Folge davon gelangen im Filtermaterial abgelagerte Schadstoffe mit der Verbrennungsluft nach draußen. Außerdem dringt von außen Luftsauerstoff ein, durch den der Brand unterstützt wird.

Es ist daher notwendig, einen sich entwickelnden Brandherd möglichst frühzeitig zu erkennen und dann zu löschen, noch bevor Schäden am Filterbehälter entstehen können.

Ein bekanntes Verfahren zur Branderkennung in einem Aktivkohlefilter sieht vor, daß die Temperaturdifferenz zwischen dem Lufteintrittsstutzen und dem Luftaustrittsstutzen des Filterbehälters überwacht wird. Eine Änderung der Temperaturdifferenz erfolgt aber erst, nachdem sich der zunächst örtlich begrenzte Brandherd auf das gesamte Filter ausgebreitet hat. Der Brand wird mit dem bekannten Verfahren erst so spät erkannt, daß zwischen Branderkennung und Zerstörung des Filtergehäuses keine Zeit für Gegenmaßnahmen bleibt. Die Unempfindlichkeit der Temperaturdifferenzmessung ist auf die relativ zum Luftstrom große Wärmekapazität des Filtermaterials und auf den hohen Durchmischungsgrad im Filter mit nicht erwärmter Luft zurückzuführen. Außerdem erfolgt ein Wärmeübergang vom Brandherd über Filter und Filterbehälter zur Außenluft.

Selbst mit einer empfindlicheren Temperaturdifferenzmessung als bisher ist es unmöglich, einen Brandherd im Aktivkohlefilter rechtzeitig zu erkennen. Dazu notwendige, sehr empfindliche Temperatursensoren würden zu Falschmeldungen führen, da in verschiedenen Betriebssituationen unterschiedliche Energiemengen durch das Filter geführt werden.

Der Erfindung liegt die Aufgabe zugrunde, ein Verfahren zum rechtzeitigen Erkennen und anschließenden Bekämpfen eines Brandes in einem Aktivkohleadsorber zu entwickeln. Dabei soll ein entstandener Brand gelöscht sein, noch bevor der Filterbehälter beschädigt wird.

Die Aufgabe wird erfindungsgemäß dadurch gelöst, daß auf der Reinluftseite des Aktivkohleadsorbers die Kohlenmonoxidkonzentration der abströmenden Luft gemessen wird, daß der Kohlenmonoxidkonzentrationswert mit einem vorgegebenen Schwellenwert verglichen wird und daß, falls der Kohlenmonoxidkonzentrationswert über dem Schwellenwert liegt, die Luftzufuhr zum Aktivkohleadsorber unterbunden wird.

In der Umgebungsluft kommt Kohlenmonoxid nur als Spurengas vor. Von der niedrigen Reinluftkonzentration ausgehend bewirkt bereits ein beginnender Schwelbrand im Aktivkohlefilter eine deutlich über dem Reinluftwert liegende Kohlenmonoxidkonzentration auf der Reinluftseite der Luftreinigungsanlage. Das Kohlenmonoxid entsteht dabei durch unvollständige Verbrennung des Filtermaterials und zum Teil auch durch Reduzierung des bei der Verbrennung anfallenden Kohlendioxids in noch funktionsfähigen Filterschichten. Ein Anstieg der Kohlenmonoxidkonzentration ist stets ein Indiz für einen Brandherd. Daher ist eine Überwachung des Konzentrationswertes auf der Reinluftseite besonders gut zur Branderkennung geeignet.

Mit der Erfindung wird der Vorteil erzielt, daß schon ein kleiner Brandherd zuverlässig schnell erkannt wird. Daher gelingt es, die Luftzufuhr zu den Aktivkohleadsorbern so frühzeitig zu unterbinden, daß der Brand erstickt wird, bevor ausgedehnte Schäden am Filter oder gar am Filterbehälter entstehen können. Eine Zerstörung des Filterbehälters ist bei Anwendung des erfindungsgemäßen Verfahrens ausgeschlossen. Die im Filtermaterial abgelagerten Schadstoffe bleiben auch bei abgeschalteter Anlage in der Luftreinigungsanlage gebunden. Die Umgebungsluft bleibt frei von Schadstoffen.

Da ein Brand schnell erkannt und gelöscht wird, wird auch die an die Umgebungsluft entweichende Kohlenmonoxidmenge auf ein Minimum begrenzt. Kohlenmonoxid ist giftig und ist bei geeigneter Mischung mit Luft explosiv. Durch die Begrenzung des Kohlenmonoxidaustritts aus einem Aktivkohleadsorber während eines Brandes wird die Sicherheit der Anlage weiter erhöht.

Das Kohlenmonoxid-Meßverfahren arbeitet unabhängig von der jeweiligen Betriebssituation des Adsorbers. Ein geeigneter Schwellenwert der Kohlenmonoxid-Konzentration bei dessen Überschreitung Brandbekämpfungsmaßnahmen eingeleitet werden, ist beispielsweise eine Kohlenmonoxidkonzentration von 30 ppm. Dann ist gewährleistet, daß die Luftzufuhr zum schwelenden Aktivkohleadsorber unterbrochen wird, noch bevor das Filtergehäuse beschädigt wird. Ein Leck im Filtergehäuse würde nicht nur Schadstoffe nach außen gelangen lassen, sondern von außen eindringender Luftsauerstoff würde den Brand weiter unterstützen.

Beispielsweise wird parallel zum automatischen Unterbrechen der Luftzufuhr Brandalarm ausgelöst. Dazu eignen sich gleichermaßen akustische und optische Signale, die vom Bedienungspersonal wahrgenommen werden.

Eine Einrichtung zur Durchführung des Verfahrens ist in einer Luftreinigungsanlage mit Ansaugrohr, Aktivkohleadsorber und Abblaserohr anzuordnen. Sie besteht aus einem Gasanalysegerät für Kohlenmonoxid, das in Strömungsrichtung hinter dem Aktivkohleadsorber mit dem Abblaserohr verbunden ist. Unmittelbar vor und unmittelbar hinter dem Aktivkohleadsorber sind luftdicht verschließbare Absperrarmaturen in den Rohren angeordnet. Der Signalausgang des Gasanalysegerätes ist mit dem ersten Eingang eines Komparators verbunden, dessen zweiter Eingang mit einer Eingabeeinheit für einen Schwellenwert in Verbindung steht. Dieser Schwellenwert definiert die Reinluft-Kohlenmonoxidkonzentration, deren Wert beispielsweise 30 ppm ist. Am Ausgang des Komparators steht ein Signal an, falls die Kohlenmonoxid konzentration im Abblaserohr den Schwellwert übersteigt. Das Signal wird Stellantrieben zugeführt, die sofort die genannten luftdicht verschließbaren Absperrarmaturen vor und hinter dem Aktivkohleadsorber schließen. Dadurch wird bereits ein kleiner Schwelbrand im Adsorber erstickt, noch bevor große Schäden am Adsorber und insbesondere am Filterbehälter entstehen.

Bei einer anderen Ausführungsform wird das Ausgangssignal des Komparators einem Ventilator zugeführt, der den Luftstrom durch das Filter bewirkt. Dabei wird bereits durch Ausschalten des Ventilators ein Schwelbrand im Adsorber erstickt.

Falls in Parallelschaltung mehrere Aktivkohleadsorber angeordnet sind, reicht ein Gasanalysegerät an einer Sammelleitung hinter den Adsorbern zum sicheren Erkennen eines Brandes in einem der Adsorber aus. Hierbei ist der meßtechnische Vorteil der erfindungsgemäßen Kohlenmonoxid-Konzentrationsüberwachung gegenüber der bekannten Temperaturüberwachung besonders groß.

Zur Überwachung von mehreren einzelnen Adsorbern ist beispielsweise ein Gasanalysegerät mit einer Meßgasumschaltung zur intermittierenden Überwachung verbunden.

Der Ausgang des Komparators ist außerdem beispielsweise mit einem Signalgeber verbunden. Dieser kann ein Lautsprecher, eine Signallampe oder eine Kombination von beiden sein. Dadurch wird der Vorteil erzielt, daß Bedienungspersonal sofort informiert wird, falls ein Aktivkohleadsorber in Brand geraten ist. Beispielsweise ist bei mehreren Adsorbern jedem ein bestimmter Signalgeber zugeordnet.

Mit der Erfindung wird der Vorteil erzielt, daß ein beginnender Brand in einem Aktivkohleadsorber, der in einer Luftreinigungsanlage installiert ist, zuverlässig so schnell erkannt wird, daß große Schäden an der Anlage und insbesondere eine Abgabe von Schadstoffen an die Umgebung verhindert werden.

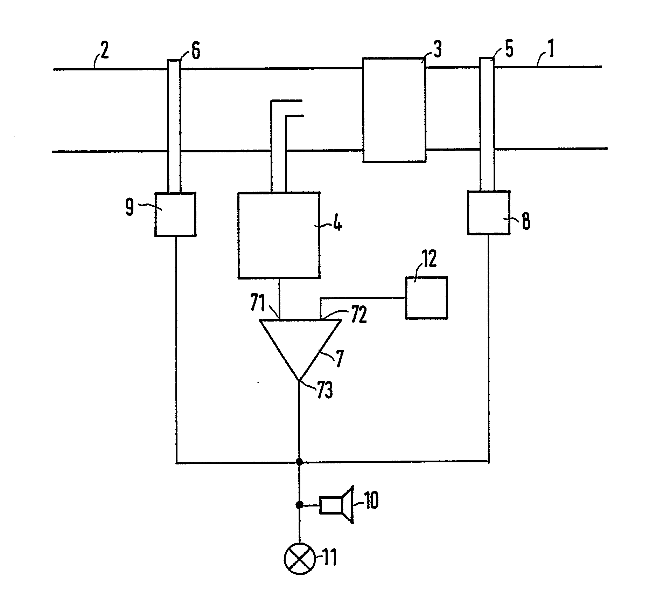

Die Erfindung wird anhand der Zeichnung näher erläutert: Die Zeichnung zeigt einen Teil einer Luftreinigungsanlage mit einer Einrichtung zum Erkennen und zur Bekämpfung von Bränden in einem Aktivkohladsorber.

Ein wesentlicher Bestandteil einer Luftreinigungsanlage ist ein Aktivkohleadsorber 3, der mit einem Ansaugrohr 1 zur Zuführung verunreinigter Luft und mit einem Abblaserohr 2 für die gereinigte Luft verbunden ist. Damit ein beginnender Brandherd im Aktivkohleadsorber 3 zuverlässig zu erkennen ist, ist in Strömungsrichtung hinter dem Aktivkohleadsorber 3 an das Abblaserohr 2 ein Gasanalysegerät 4 für Kohlenmonoxid angeschlossen. Schon bei einem kleinen Schwelbrand in der Aktivkohle des Aktivkohleadsorbers 3 wird im Abblaserohr 2 im Vergleich zur Konzentration in Reinluft eine hohe Kohlenmonoxidkonzentration erreicht. Diese Konzentration wird von dem an sich bekannten Gasanalysegerät 4 gemessen und der Konzentrationswert wird als Signal abgegeben. Der Signalausgang des Gasanalysegerätes 4 steht mit dem ersten Eingang 71 eines Komparators 7 in Verbindung. Dem zweiten Eingang 72 des Komparators 7 wird ein zuvor festgelegter Schwellenwert der Kohlenmonoxidkonzentration durch eine Eingabeeinheit 12 zugeleitet. Dieser Schwellenwert beträgt beispielsweise 30 ppm. Am Ausgang 73 des Komparators 7 steht dann ein Signal an, falls die vom Gasanalysegerät 4 gemessene Kohlenmonoxidkonzentration den Schwellenwert übersteigt.

Der Ausgang 73 des Komparators 7 steht mit Stellantrieben 8 und 9 in Verbindung, die Absperrarmaturen 5 und 6 bewegen. Die Absperrarmatur 5 ist im Ansaugrohr 1 vor dem Aktivkohleadsorber 3 angeordnet. Die Absperrarmatur 6 befindet sich im Abblaserohr 2 hinter dem Gasanalysegerät 4. Durch ein Ausgangssignal des Komparators 7 werden das Ansaugrohr 1 und das Abblaserohr 2 durch die Absperrarmaturen 5 und 6 luftdicht verschlossen. Dadurch wird ein Schwelbrand im Aktivkohleadsorber 3 sofort erstickt. Der Brand ist gelöscht noch bevor der Filterbehälter des Aktivkohleadsorbers 3 beschädigt wird und Schadstoffe an die Umgebung gelangen können. Mit dem Ausgang des Komparators 7 sind außerdem ein Lautsprecher 10 und eine Anzeigelampe 11 als Signalgeber verbunden. Damit wird ergänzend zur automatischen Löscheinrichtung Personal auf den Brand im Aktivkohleadsorber 3 aufmerksam gemacht.

Durch das schnelle zuverlässige Erkennen eines Brandes und dem darauffolgenden schnellen Absperren des Ansaugrohres 1 und des Abblaserohres 2 werden große Brandschäden an der Luftreinigungsanlage ausgeschlossen.

## Ansprüche

1. Verfahren zum Erkennen und zur Bekämpfung eines Brandes in einem Aktivkohleadsorber (3), der in einer Luftreinigungsanlage angeordnet ist, **dadurch gekennzeichnet**, daß auf der Reinluftseite des Aktivkohleadsorbers (3) die Kohlenmonoxidkonzentration der abströmenden Luft gemessen wird, daß der Kohlenmonoxidkonzentrationswert mit einem vorgegebenen Schwellenwert verglichen wird und daß, falls der Kohlenmonoxidkonzentrationswert über dem Schwellenwert liegt, die Luftzufuhr zum Aktivkohleadsorber (3) unterbunden wird.

2. Verfahren nach Anspruch 1, **dadurch gekennzeichnet**, daß dann, wenn der Kohlenmonoxidkonzentrationswert über dem Schwellenwert liegt, Brandalarm ausgelöst wird.

3. Einrichtung zur Durchführung des Verfahrens nach Anspruch 1 in einer Luftreinigungsanlage mit Ansaugrohr (1) und Abblaserohr (2), in der ein Aktivkohleadsorber (3) angeordnet ist, **dadurch gekennzeichnet**, daß in Strömungsrichtung hinter dem Aktivkohleadsorber (3) ein Gasanalysegerät (4) für Kohlenmonoxid an das Abblaserohr (2) angeschlossen ist, daß unmittelbar vor dem Aktivkohleadsorber (3) im Ansaugrohr (1) eine luftdicht verschließbare Absperrarmatur (5) angeordnet ist, daß unmittelbar hinter dem Aktivkohleadsorber (3) im Abblaserohr (2) eine weitere luftdicht verschließbare Absperrarmatur (6) angeordnet ist, daß der Signalausgang des Gasanalysegerätes (4) mit dem ersten Eingang (71) eines Komparators verbunden ist, dessen zweiter Eingang (72) mit einer Eingabeeinheit (12) für einen Schwellenwert in Verbindung steht, und daß der Ausgang (73) des Komparators (7) mit Stellantrieben (8, 9) der luftdicht verschließbaren Absperrarmaturen (5, 6) verbunden ist.

4. Einrichtung nach Anspruch 3, **dadurch gekennzeichnet**, daß der Ausgang (73) des Komparators (7) mit Signalgebern (10, 11) verbunden ist.

5. Einrichtung nach Anspruch 3, wobei im Ansaugrohr (1) und/oder im Abblaserohr (2) ein Ventilator angeordnet ist, **dadurch gekennzeichnet**, daß der Ausgang (73) des Komparators (7) mit einem Schalter des Ventilators verbunden ist.

**Europäisches Patentamt**

# EUROPÄISCHER RECHERCHENBERICHT

Nummer der Anmeldung

EP 87 10 1931

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 118 183 (FISONS) <br> * Seite 1, Zeile 23 - Seite 3, Zeile 5 * | 1,2 | A 62 C 3/04 <br> B 01 D 53/02 <br> G 08 B 17/10 |
| | --- | | |
| Y | DE-A-2 843 627 (DEUTSCHE BABCOCK AG) <br> * Seite 5, erster Absatz * | 1,2 | |
| | --- | | |
| A | US-A-3 765 842 (G. PURT) <br> * Patentansprüche 1,10; Spalte 3, Zeile 25 - Spalte 5, Zeile 10; Figur 1 * | 1-4 | |
| | ----- | | |

| RECHERCHIERTE SACHGEBIETE (Int. Cl.4) |
|---|
| A 62 C 3/00 <br> B 01 D 53/00 <br> G 08 B 17/00 |

Der vorliegende Recherchenbericht wurde für alle Patentansprüche erstellt.

| Recherchenort | Abschlußdatum der Recherche | Prüfer |
|---|---|---|
| DEN HAAG | 27-05-1987 | POLESAK, H.F. |